# EUROPEAN PATENT SPECIFICATION

(11) **EP 0 629 651 B1**
(45) Date of publication and mention of the grant of the patent: **28.10.1998**
(21) Application number: 94303821.6
(22) Date of filing: 26.05.1994
(51) Int. Cl.: C08J 3/205, B29C 70/12

(54) **Process for producing fiber reinforced composite material**
Verfahren zur Herstellung eines faserverstärkten Verbundmaterials
Procédé pour préparer un matériau, composite renforcé de fibres

(30) Priority: 28.05.1993 JP 127403/93
(43) Date of publication of application: 21.12.1994
(73) Proprietor: MITSUBISHI CHEMICAL CORPORATION, Chiyoda-ku, Tokyo-to (JP)
(72) Inventor: Ohno, Kenyu, c/o Mitsubishi Petrochemical Co.Ltd., Yokkaichi-shi, Mie-ken (JP); Osawa, Toshiyuki, c/o Nippon Steel Corp., Tokyo-to (JP); Sakaba, Norio, c/o Nippon Steel Corp., Tokai-shi, Aichi-ken (JP)
(74) Representative: Kyle, Diana

(56) References cited:
- EP-A- 0 483 716
- US-A- 3 432 462
- US-A- 3 857 813
- US-A- 4 913 774

## Description

### BACKGROUND OF THE INVENTION

### Field of the Invention

This invention relates to a process for producing fiber-reinforced composite materials. More particularly, this invention relates to a process for producing fiber-reinforced composite materials which are stable in the quality and have a good colored-surface appearance.

### Background Art

Heretofore, fiber-reinforced composite materials, which are synthetic resins, such as thermoplastic or thermosetting resins, reinforced by reinforcing fibers, have been employed as materials for use in the fields of parts of automobiles, light electrical appliances and other industrial products, construction materials, household articles and the like. They have been particularly utilized for those products which are required to have high strength and rigidity and good durability and dimensional stability.

Of these composite materials, fiber-reinforced composite materials comprising a thermoplastic resin and reinforcing fibers have been produced by the following processes:
a) a process as disclosed. for example, in Japanese Patent Laid-Open Publications Nos 61-44930 and 62-57428, in which a reinforcing fiber mat is impregnated with a thermoplastic resin which is in a molten state, followed by pressing and cooling to obtain a composite material (lamination);
b) a process as disclosed, for example, in Japanese Patent Publication No 49-29947 and Japanese Patent Laid-Open Publication No 59-49929 in which a particulate thermoplastic resin and reinforcing fibers are blended, and the resulting blend is made into a web, followed by heating, pressing and cooling to obtain a composite material (dry forming); and
c) a process as disclosed, for example, in Japanese Patent Laid-Open Publications Nos 57-28135, 60-158227, 60-158228 and 1-318045, in which a particulate thermoplastic resin and reinforcing fibers are blended in water or in an aqueous foam, and the resulting blend is made into a web by the paper-making method, followed by heating, pressing and cooling to obtain a composite material (wet forming).

In any of the above processes a) to c), it is necassary to add a variety of additives and colorants or pigments depending upon the use of the resulting composite material.

With the above lamination process for the production of fiber-reinforced composite materials, it is relatively easy to obtain composite materials with various formulations and with various colors. This is because, in such a process, a colored thermoplastic resin to which an additive and the like are added in advance is melted in an extruder or the like, or after a thermoplastic resin is blended with an additive, a pigment or the like, the blend is melted in an extruder or the like, and then a reinforcing fiber mat is impregnated with the melted resin.

On the other hand, in the above-described dry forming and wet forming processes, a thermoplastic resin, and an additive and a pigment are not melted and kneaded in advance. Accordingly, the additive and the pigment cannot be uniformly dispersed in the thermoplastic resin as compared with the lamination process. It is therefore difficult to obtain a uniformly colored sheet.

In the dry forming and the wet forming processes, an additive, a colorant and the like are added in the following manners:
(1) a technique in which an additive, a pigment and the like are directly added to a mixing tank;
(2) a technique in which a granular master batch containing an additive, a pigment and the like is added to a mixing tank;
(3) a technique in which a particulate thermoplastic resin whose surface is coated with an additive, a pigment and the like in advance is used;
(4) a technique in which pellets obtained by melting and kneading a thermoplastic resin along with an additive, a pigment and the like in an extruder or the like, or granules obtained by pulverizing the pellets into a predetermined size are used, for example US Patent No. 4,913,774 discloses a wet process in which a thermoplastic composite is prepared by dewatering and drying an aqueous suspension of reinforcing fibers, thermoplastic resin and adjuvants, wherein the resin and adjuvant are introduced as a powder formed by extruding an intimate mixture of the resin and adjuvant to form granules and grinding to obtain the powder; or
(5) a technique in which a composite material in the form of a web is impregnated with a dispersion containing an additive, a pigment and the like.

However, the above techniques have the following drawbacks: With the manners (1) and (5), it is difficult to fully attach a predetermined amount of an additive, a pigment and the like to the surface of a particulate thermoplastic resin. As regards techniques (2) and (3), although a predetermined amount of an additive, a pigment and the like can be attached to the surface of a particulate thermoplastic resin, their dispersion is poor. Although the technique (4) can overcome the above-described drawbacks in the techniques (1), (2), (3) and (5), a considerably high cost is incurred for the steps of the preparation and the pulverization of the pellets. Thus, none of these techniques is fully satisfactory.

The following references describe incorporation of reinforcing fibers into thermoplastic materials.

US Patent No 3,857,813 relates to the incorporation by dry blending of reinforcing fibers into powders of porous polyolefins, such as polyethylene or polypropylene, the individual particles of which have an average free volume in the range of 20 to 50 volume percent, based on the total volume of particles in the powder. Various additives can also be incorporated.

US Patent No 3,432,462 relates to incorporation of additives into polyolefins by immersing substantially crystalline polyolefins in solid divided form such as pellets, which have previously been rendered porous, in a solvent solution of an additive whereby the additive is adsorbed onto the polyolefin.

EP 0 483 716 relates to a method of producing fiber-reinforced thermoplastic resin molding material by heating and pressing a nonwoven material mainly composed of reinforcing fibers and a thermoplastic resin made by a paper making method and then cooling the nonwoven material. The reinforcing fibers comprise fiber bundles each of which comprises a plurality of single fibers bundled with a binder or a mixture of single fibers and fiber bundles.

It has now been found by the present inventors that the drawbacks previously mentioned in the conventional wet forming process for the production of fiber-reinforced composite materials can be overcome by using as the starting resin a specific form of thermoplastic resin. The present invention has been accomplished based on this finding.

Thus, the present invention provides a process for producing a fiber-reinforced composite material which comprises uniformly mixing and dispersing thermoplastic resin particles and reinforcing fibers in water or in an aqueous foam to obtain a dispersion, dehydrating the resulting dispersion to form a web by the paper-making technique and drying, and heating, pressing and cooling the web, characterised in that the thermoplastic resin is in the form of porous resin particles having open pores.

According to the process of the present invention, additional matters such as an additive, a modifier and a pigment can be uniformly dispersed, so that fiber-reinforced composite materials which have excellent properties and colored-surface appearance can be produced.

### [I] Process for Producing Fiber-Reinforced Composite Materials

### (1) Raw Materials

### (a) Thermoplastic Resin

Examples of the thermoplastic resin usable in the process of the present invention include polyethylene, polypropylene, polystyrene, polyvinyl chloride, ABS resin, SAN resin, polyamide, polycarbonate, polyacetal, polyethylene terephthalate, polybutylene terephthalate, polyphenylene oxide, polysulfone and polyphenylene sulfide. It is also possible to use a mixture of two or more of these thermoplastic resins. Further, a mixture of a minor amount of thermosetting resin or the like with the above thermoplastic resin can also be used.

Of the above thermoplastic resins, it is preferable to use polyolefin such as polyethylene or polypropylene from the viewpoint of the glass-fiber reinforcing effects (improvements in strength, rigidity and the like), and because a particulate resin form suited for use in the present invention can be economically obtained as a polymerization powder. It is particularly preferable to use polypropylene from the viewpoint of the balance of moldability, physical properties and economy.

### Form

In the present invention, it is essential that the thermoplastic resin be in the form of porous particles having open pores. In the conventional wet forming processes, non-porous resin particles have been employed so far. Taking now polypropylene as an example, a polypropylene powder consisting of non-porous particles of a spherical or irregular shape, having a diameter of several µm to several mm have been employed.

When an additive, a pigment or the like are added to such a non-porous resin powder in the above-described techniques (1), (2), (3) or (5), these additional matters cannot be adequately adsorbed and fixed on the surface of the powder or, even when they are successfully adsorbed on the powder, they cannot permeate into the inside of the powder particles, and they partly agglomerate on the particles. For this reason, a composite material having intended physical properties and colored-surface appearance can hardly be obtained.

In contrast, when a resin powder is in the form of porous particles with open pores, an additive, a pigment or the like added to the powder can partly permeate into the inside of the particles. Thus, the additional matters can be successfully adsorbed and fixed both on the outer surface and in the inner portion of the powder without causing any serious agglomeration thereof, whereby a composite material having improved physical properties and colored-surface appearance can be obtained.

In the present invention, it is preferred to use resin particles having a porosity (void volume) of 20 - 80 vol%, especially 30 - 75 vol%. The use of a porous resin powder having a porosity less than 20 vol% should desirably be avoided since in this case the effect of the addition of an additive, a pigment and the like is sometimes insufficient. On the other hand, the use of a porous resin powder having a porosity exceeding 80 vol% should desirably be avoided since in this case the powder can also easily adsorb air, water and other foreign matters in the course of the process. An extra step and cost are therefore required to remove them from the resin. Further, the physical properties of the resulting composite material tend to be lowered.

The measurement of porosity (void volume) can be made with a porosimeter.

The pore opening size of the pores may be selected depending upon the properties and the form of an additive, a pigment and the like to be added. However, in general, the mean pore opening size is preferably 0.1 to 20 µm. When the mean opening size is less than 0.1 µm, the effect of the addition of an additive, a pigment and the like is sometimes insufficient. On the other hand, when the mean pore opening size is in excess of 20 µm, the porous resin particles may also easily adsorb air, water and other foreign matters in the course of the process.

The use of a particulate thermoplastic resin consisting of porous particles having open pores according to the present invention have the further advantage that the adhesion between the resin and reinforcing fibers is enhanced as compared with the use of conventional resin particles having a smooth surface. This also affords improvements on the mechanical properties of the resulting composite material according to the present invention.

### Preparation of porous resin particles

The above particulate thermoplastic resin in the form of porous particles having open pores may be prepared by the following methods:
(a) a method in which a porous resin powder is directly obtained by the polymerization using a porous catalyst;
(b) a method in which a non-porous resin powder is mixed with a specific solvent, heated and melted, and then cooled and solidified to give a solid, from which the solvent is removed;
(c) a method in which non-porous resin powder is mechanically pulverized; and
(d) a method in which a non-porous resin powder is subjected to extraction with a specific solvent.

A porous thermoplastic resin powder having a porosity (void volume) of 25 to 80 vol% may preferably be prepared by the above method (a), (b) or (d).

### (b) Reinforcing Fibers

Examples of the reinforcing fibers to be used in the process for producing fiber-reinforced composite materials according to the present invention include glass fibers, carbon fibers, metallic fibers and other inorganic and organic fibers. Of these fibers, glass fibers are most frequently employed. Glass fibers may also be used in admixture with other fibers such as carbon, aramid, metallic and ceramic fibers.

The glass fibers are usually employed in the form of chopped strands. In general, the chopped strands have a length of 3 to 50 mm and a fiber diameter of approximately 3 to 25 µm.

The chopped glass strands may be surface-treated, depending upon the use of the resulting composite material, with a coupling agent such as an aminosilane coupling agent or an epoxysilane coupling agent, or with binding agent such as polyvinyl alcohol, polyvinyl acetate or polyurethane.

### (c) Additional Matters

The following additives, modifiers and pigments can be mentioned as the additional matters for use in the process for producing fiber-reinforced composite materials according to the present invention.

### Additive

Examples of the additives usable in the present invention include conventional additives such as a neutralizer, an antioxidant, processing stabilizer, a heat-resistance improver, a weather-resistance improver, an antistatic agent and a flame retarder which are in the form of fine particles or liquid. These additives may also be used as a master batch.

### Modifier

Examples of the modifiers usable in the present invention include conventional modifiers such as a fluidity improver, an impact-resistance improver, a modifier for the interface between a polymer and reinforcing fibers, a foaming agent, a crosslinking agent and a filler which are in the form of fine particles or liquid. These modifiers may also be used as a master batch which is prepared by impregnating a thermoplastic resin with the above modifiers in high concentration can also be used.

### Pigment

Examples of the pigments usable in the present invention include those pigments which are conventionally used as colorants for plastic materials, such as inorganic pigments, for instance, ultramarine, cadmium yellow, red iron oxide, chrome yellow, white lead, titanium white, carbon black and amber, and organic pigments, for instance, azo, triphenylmethane, quinoline, anthraquinone and phthalocyanine pigments, which are in the form of fine particles or of a dispersion in a liquid. These pigments may also be used as a master batch.

### (2) Blend Ratio

The blend ratio of the thermoplastic resin to the reinforcing fibers is generally 90 - 30% by weight of the thermoplastic resin to 10 - 70% by weight of the reinforcing fiber, preferably 85 - 50% by weight to 15 - 50% by weight, more preferably 80 - 50% by weight to 20 - 50% by weight. When the proportion of the thermoplastic resin is higher than 90% by weight, the resulting composite material is likely to have poor strength and rigidity. On the other hand, when the proportion of the thermoplastic resin is lower than 50% by weight, the resulting composite material tends to have poor moldability, impact resistance and appearance.

The additional matters are used generally in an amount of 0.3 to 20 parts by weight for 100 parts by weight of the total of the thermoplastic resin and the reinforcing fibers.

### (3) Production of Nonwoven Web (Blending/Dispersion)

The particulate thermoplastic resin and the reinforcing fibers having a length of approximately 3 to 50 mm are uniformly mixed and dispersed, and the resulting mixture is then formed into a nonwoven web.

The nonwoven web may be prepared by the conventional wet forming process, as set forth below.

### Wet forming

The particulate thermoplastic resin and chopped strands of reinforcing fibers (generally having a length of 3 to 50 mm) are uniformly mixed and dispersed in water or in an aqueous foam, and the resulting dispersion is then dehydrated to form a web (by the paper making technique).

The nonwoven web produced by the wet forming process using the paper making technique is usually still in a wet state. It is therefore preferable to further dry the web.

In the wet forming process the glass fibers are dispersed more uniformly and the resulting composite material can have better properties such as strength, rigidity and dimensional stability.

### (4) Production of Composite Material

The fiber-reinforced composite material of the present invention can be produced by heating, pressing and cooling the above-obtained nonwoven web. The steps of the heating, pressing and cooling of the web may be conducted under the following conditions.

### Heating

The heating is conducted at a temperature at which the thermoplastic resin used is melted.

The temperature is generally 20 to 60°C higher, preferably 30 to 50°C higher than the melting or softening point of the thermoplastic resin.

### Pressing

The pressing is conducted at a pressure at which the thermoplastic resin and the reinforcing fibers used can be fully adhered. Specifically, the pressure is generally from 49 to 39227 kPa (0.5 to 400 kgf/cm²), preferably from 49 to 2942 kPa (0.5 to 30 kgf/cm²). The pressing time is generally 30 to 300 seconds.

### Cooling

It is desirable to cool the heated and pressed web to room temperature. However, the cooling of the web to a temperature 20°C or more lower than the softening point of the thermoplastic resin may be acceptable.

### [II] Fiber-Reinforced Composite Material

The fiber-reinforced composite material produced by the process of the present invention has, in general, a basis weight of 500 to 5,000 g/m². In this composite material, the additives, pigments and the like are fully adsorbed on the outer surface and the inner surfaces of pores of the particulate resin and are uniformly dispersed in the resin without the steps of preparing pellets and pulverizing them being resorted to.

Accordingly, a molded product obtained from the fiber-reinforced composite material by an ordinary molding method such as stamping has excellent physical properties and appearance.

The following examples further illustrate the present invention but are not intended to limit it.

### Example 1

(1) Production of porous polypropylene powder having open pores
   In a 2 liter flask were placed 20 g of polypropylene powder, 300 ml of n-heptane and 1,200 ml of n-octane, and the temperature of the mixture was raised to the boiling point of solvent mixture, and the polypropylene was kept in contact with the solvent mixture for 30 minutes. The mixture was then taken from the flask and dried under the atmosphere of nitrogen. A porous polypropylene powder having a mean particle diameter of approximately 350 µm, a porosity of 30 vol% and a mean pore opening size of approximately 5 µm was thus produced.
(2) Production of fiber-reinforced composite material
   A surface active agent was added to 9 liters of water, and the water was thoroughly stirred to foam it to a volume of approximately 25 liters. To this aqueous foam were added 162 g of the above porous polypropylene powder, 108 g of a chopped glass strand of 2,000 fibers having a fiber diameter of 10 µm and a length of 13 mm, which is easy to disintegrate in water into fibers, and 41 g of an additive mixture (1:2:2 mixture of a metallic salt of a fatty acid : a phenol-based stabilizer : a sulfur-based stabilizer), and the mixture was thoroughly stirred again. The dispersion was then made into a wet web by the paper making technique, and then completely dried in a hot-air driver. The water content in the wet web and the time taken to dry up the wet web were measured. The dried web was heated, pressed, and then cooled to make a sheet having a thickness of approximately 2 mm. A test piece of 4 cm x 5 cm in size was cut from this sheet, and placed in an oven with internal air circulation adjusted to a temperature of 150°C. The time taken for the test piece to deteriorate was measured. The results of the measurements are shown in Table 1.

### Example 2

The procedure of Example 1 was repeated except that the polypropylene powder used in Example 1 was replaced by a polypropylene powder having a porosity of 59 vol% (the mean particle diameter and the mean pore opening size being the same). The results are shown in Table 1.

### Example 3

The procedure of Example 1 was repeated except that the polypropylene powder used in Example 1 was replaced by a polypropylene powder having a porosity of 75 vol%. The results are shown in Table 1.

### Example 4

The procedure of Example 1 was repeated except that the polypropylene powder used in Example 1 was replaced by a polypropylene powder having a porosity of 82 vol%. The results are shown in Table 1.

### Example 5

100 parts by weight of a porous polypropylene powder having a mean particle diameter of approximately 350 µm, a porosity of 30 vol% and a mean pore opening size of approximately 10 µm, 0.3 part by weight of an additive mixture (1:2:2 mixture of a metallic salt of a fatty acid : a phenol-based stabilizer : a sulfur-based stabilizer), and 1 part by weight of a black pigment (carbon black "Balkan 9A-32" manufactured by Cabot Corp. U.S.A.) were mixed in a 30 liter Henschel mixer to prepare a colored polypropylene powder coated with the additive and the pigment.

The conditions for the mixing were as follows: the temperature of the mixing tank was 90°C, the rotation speed of the agitation element was 700 rpm, and the mixing time was 210 seconds (when the temperature of the mixture rose suddenly and reached to 150°C, the mixing was terminated).

A surface active agent was added to 9 liters of water, and the water as thoroughly stirred to foam it to a volume of approximately 25 liters. To this aqueous foam were added 164 g of the above-obtained colored powder and 108 g of a chopped glass strand of 2,000 fibers having a fiber diameter of 10 µm and a length of 13 mm, which is easy to disintegrate in water into fibers, and the mixture was thoroughly stirred again. The dispersion was then made into a wet web by the paper making technique, and then completely dried in a hot-air drier. The water content in the wet web and the time taken to dry up the wet web were measured. The dried web was heated, pressed, and then cooled to form a sheet having a thickness of approximately 2 mm. A test piece of 4 cm x 5 cm in size was cut from this sheet, and the color value of the surface of the test piece was determined using "CR-100" manufactured by Minolta Camera Co., Ltd. The results of the measurements are shown in Table 2.

### Example 6

The procedure of Example 5 was repeated except that the polypropylene powder used in Example 5 was replaced by a polypropylene powder having a porosity of 60 vol%. The results are shown in Table 2.

### Example 7

The procedure of Example 5 was repeated except that the polypropylene powder used in Example 5 was replaced by a polypropylene powder having a porosity of 75 vol%. The results are shown in Table 2.

### Example 8

The procedure of Example 5 was repeated except that the polypropylene powder used in Example 5 was replaced by a polypropylene powder having a porosity of 85 vol%. The results are shown in Table 2.

### Example 9

A surface active agent was added to 9 liters of water, and the water was thoroughly stirred to foam it to a volume of approximately 25 liters. To this aqueous foam were added 162 g of a porous polypropylene powder having a mean particle diameter of approximately 350 µm, a porosity of 30 vol% and a mean pore opening size of approximately 10 µm, and 108 g of a chopped glass strand of 2,000 fibers having a fiber diameter of 10 µm and a length of 13 mm, which is easy to disintegrate in water into fibers, and the mixture was thoroughly stirred again. The dispersion was then made into a water-containing web by the paper making technique.

Separately, a dispersion was prepared by dispersing, in 1,000 g of water, 8.1 g of a black pigment (carbon black "Balkan 9A-32" manufactured by Cabot Corp. U.S.A.), 2.4 g of an additive mixture (1:2:2 mixture of a metallic salt of a fatty acid : a phenol-based stabilizer : a sulfur-based stabilizer), 16 g of polyvinyl alcohol (saponification degree of approximately 90 mol%) as a binder, and a small amount of a surface active agent. This dispersion was sprayed onto the upper and lower surfaces of the above-obtained water-containing web. The amount of the dispersion sprayed was 100 g each. Thereafter, the web was completely dried in a hot-air oven, and the time taken to dry up the web was measured. The dried web was heated, pressed, and then cooled to obtain a sheet having a thickness of approximately 2 mm. A test piece of 4 cm x 5 cm in size was out from this sheet, and the color value of the surface of the test piece was determined using "CR-100" manufactured by Minolta Camera Co., Ltd. The results of the measurements are shown in Table 3.

### Example 10

The procedure of Example 9 was repeated except that the polypropylene powder used in Example 9 was replaced by a polypropylene powder having a porosity of 75 vol%. The results are shown in Table 3.

### Example 11

The procedure of Example 9 was repeated except that the polypropylene powder used in Example 9 was replaced by a polypropylene powder having a void volume of 85 vol%. The results are shown in Table 3.

### Comparative Example 1

The procedure of Example 1 was repeated except that the polypropylene powder used in Example 1 was replaced by a non-porous polypropylene powder. The results are shown in Table 1.

### Comparative Example 2

The procedure of Example 5 was repeated except that the polypropylene powder used in Example 5 was replaced by a non-porous polypropylene powder. The results are shown in Table 2.

### Comparative Example 3

The procedure of Example 9 was repeated except that the polypropylene powder used in Example 9 was replaced by a non-porous polypropylene powder. The results are shown in Table 3.

**Table 1**

| Example No. | Porosity (vol%) | Mean pore opening size (µm) | Water content of web (wt%) | Time to dry up web (at 120°C, minutes) | Long-term heat resistance (at 150°C, hours) |
|---|---|---|---|---|---|
| Example 1 | 30 | 5 | 30 | 35 | 820 |
| Example 2 | 59 | 5 | 52 | 45 | 1,020 |
| Example 3 | 75 | 5 | 78 | 60 | 980 |
| Example 4 | 82 | 5 | 115 | 80 | 960 |
| Comp. Example 1 | 0 | - | 14 | 20 | 125 |

**Table 2**

| Example No. | Porosity (vol%) | Mean pore opening size (µm) | Water content of web (wt%) | Time to dry up web (at 120°C, minutes ) | Color value* |
|---|---|---|---|---|---|
| Example 5 | 30 | 10 | 24 | 30 | 21 |
| Example 6 | 60 | 10 | 43 | 40 | 20 |
| Example 7 | 75 | 10 | 65 | 50 | 19 |
| Example 8 | 85 | 10 | 98 | 75 | 18 |
| Comp. Example 2 | 0 | - | 13 | 20 | 29 |

| | | | | | |
|---|---|---|---|---|---|
| *: A smaller value indicates a deeper black color, thus indicating a higher tinting. | | | | | |

**Table 3**

| Example No. | Porosity (vol%) | Mean pore opening size (µm) | Time to dry up web (at 120°C, minutes) | Color value* |
|---|---|---|---|---|
| Example 9 | 30 | 10 | 45 | 22 |
| Example 10 | 75 | 10 | 60 | 19 |
| Example 11 | 85 | 10 | 125 | 19 |
| Comp. Example 3 | 0 | - | 30 | 30 |

| | | | | |
|---|---|---|---|---|
| *: A smaller value indicates a deeper black color, thus indicating a higher tinting. | | | | |

## Claims

1. A process for producing a fiber-reinforced composite material which comprises uniformly mixing and dispersing thermoplastic resin particles and reinforcing fibers in water or in an aqueous foam to obtain a dispersion, dehydrating the resulting dispersion to form a web by the paper-making technique and drying, and heating, pressing and cooling the web, characterised in that the thermoplastic resin is in the form of porous resin particles having open pores.

2. The process according to claim 1, wherein the porous resin particles have a porosity of 25 to 80 vol%.

3. A process according to claim 1 or 2, wherein the porous resin particles have a mean pore opening size of 0.1 to 20 µm.

4. The process according to any one of the preceding claims, wherein the thermoplastic resin is polypropylene.

5. The process according to any one of the preceding claims, wherein the reinforcing fibers are glass fibers.

6. The process according to claim 5, wherein the glass fibers have a length of 3 to 50 mm and a diameter of 3 to 25 µm.

7. The process according to any one of the preceding claims, wherein the blend ratio of the thermoplastic resin to the reinforcing fibers is 30 - 90% by weight to 70 - 10% by weight.

8. The process according to claim 7, wherein the blend ratio of the thermoplastic resin to the reinforcing fibers is 50 - 80% by weight to 50 - 20% by weight.

9. The process according to any one of the preceding claims, wherein the porous resin particles have been coated with an additional matter selected from an additive, a modifier, a pigment, and a mixture thereof.

10. The process according to any one of the preceding claims, wherein an additional matter selected from an additive, a modifier, a pigment and a mixture thereof is added upon the blending of the thermoplastic resin and the reinforcing fibers.

11. The process according to any one of the preceding claims, wherein the web formed is impregnated with a dispersion containing an additional matter selected from an additive, a modifier, a pigment and a mixture thereof, followed by drying.

12. The process according to any one of claims 9 to 11, wherein the amount of the additional matter is from 0.3 to 20 parts by weight for 100 parts by weight of the total of the thermoplastic resin and the reinforcing fibers.

## Patentansprüche

1. Verfahren zur Herstellung eines faserverstärkten Verbundmaterials, wobei man thermoplastische Harzpartikel und Verstärkungsfasern in Wasser oder in einem wässrigen Schaum einheitlich vermischt und dispergiert, um eine Dispersion zu erhalten, die sich ergebende Dispersion entwässert, um ein Gewebe mit der Papierherstellungsverfahrenstechnik zu bilden, dann trocknet und das Gewebe erwärmt, verpreßt und abkühlt, dadurch gekennzeichnet, daß das thermpolastische Harz in der Form poröser Harzpartikel vorliegt, die offene Poren aufweisen.

2. Verfahren gemäß Anspruch 1, worin die porösen Harzpartikel eine Porosität von 25 bis 80 Vol.% aufweisen.

3. Verfahren gemäß Anspruch 1 oder 2, worin die porösen Harzpartikel eine Durchschnittsporenöffnungsgröße von 0,1 bis 20 µm aufweisen.

4. Verfahren gemäß jedem der vorhergehenden Ansprüche, worin das thermoplastische Harz Polypropylen ist.

5. Verfahren gemäß jedem der vorhergehenden Ansprüche, worin die Verstärkungsfasern Glasfasern sind.

6. Verfahren gemäß Anspruch 5, worin die Glasfasern eine Länge von 3 bis 50 mm und einen Druchmesser von 3 bis 25 µm aufweisen.

7. Verfahren gemäß jedem der vorhergehenden Ansprüche, worin das Mischverhältnis des thermoplastischen Harzes zu den Verstärkungsfasern 30 bis 90 Gew.% zu 70 bis 10 Gew.% beträgt.

8. Verfahren gemäß Anspruch 7, worin das Mischverhältnis des thermoplastischen Harzes zu den Verstärkungsfasern 50 bis 80 Gew.% zu 50 bis 20 Gew.% beträgt.

9. Verfahren gemäß jedem der vorhergehenden Ansprüche, wobei die porösen Harzpartikel mit einem Zusatzstoff überzogen worden sind, ausgewählt aus einem Additiv, einem Modifiziermittel, einem Pigment und aus einer Mischung davon.

10. Verfahren gemäß jedem der vorhergehenden Ansprüche, wobei ein Zusatzstoff, ausgewählt aus einem Additiv, einem Modifiziermittel, einem Pigment und aus einer Mischung davon, beim Vermischen des thermoplastischen Harzes und der Verstärkungsfasern zugegeben wird.

11. Verfahren gemäß jedem der vorhergehenden Ansprüche, wobei das gebildete Gewebe mit einer Dispersion, enthaltend einen Zusatzstoff, ausgewählt aus einem Additiv, einem Modifiziermittel, einem Pigment und aus einer Mischung davon, imprägniert wird, worauf eine Trocknung erfolgt.

12. Verfahren gemäß jedem der Ansprüche 9 bis 11, worin die Menge des Zusatzstoffes 0,3 bis 20 Gew.Teile auf 100 Gew.Teile Gesamtheit aus thermoplastischem Harz und Verstärkungsfasern beträgt.

## Revendications

1. Procédé de production d'un matériau composite renforcé par des fibres, qui comprend les étapes consistant à mélanger uniformément et à disperser des particules d'une résine thermoplastique et des fibres de renforcement dans de l'eau ou dans une mousse aqueuse pour obtenir une dispersion, à déshydrater la dispersion obtenue pour former une feuille continue par la technique papetière, et à sécher, et à chauffer, comprimer et refroidir la feuille continue, caractérisé en ce que la résine thermoplastique se présente sous forme de particules de résine poreuse ayant des pores ouverts.

2. Procédé selon la revendication 1, dans lequel les particules de résine poreuse ont une porosité de 25 à 80% en volume.

3. Procédé selon la revendication 1 ou 2, dans lequel les particules de résine poreuse ont un diamètre moyen des pores de 0,1 à 20 µm.

4. Procédé selon l'une quelconque des revendications précédentes, dans lequel la résine thermoplastique est du polypropylène.

5. Procédé selon l'une quelconque des revendications précédentes, dans lequel les fibres de renforcement sont des fibres de verre.

6. Procédé selon la revendication 5, dans lequel les fibres de verre ont une longueur de 3 à 50 mm et un diamètre de 3 à 25 µm.

7. Procédé selon l'une quelconque des revendications précédentes, dans lequel le rapport de mélange de la résine thermoplastique aux fibres de renforcement est de 30-90% en poids pour 70-10% en poids.

8. Procédé selon la revendication 7, dans lequel le rapport de mélange de la résine thermoplastique aux fibres de renforcement est de 50-80% en poids pour 50-20% en poids.

9. Procédé selon l'une quelconque des revendications précédentes, dans lequel les particules de résine poreuse ont été enrobées d'une substance supplémentaire choisie parmi les additifs, les modifiants, les pigments et leurs mélanges.

10. Procédé selon l'une quelconque des revendications précédentes, dans lequel une substance supplémentaire, choisie parmi les additifs, les modifiants, les pigments et leurs mélanges, est ajoutée après mélange de la résine thermoplastique et des fibres de renforcement.

11. Procédé selon l'une quelconque des revendications précédentes, dans lequel la feuille continue formée est imprégnée d'une dispersion contenant une substance supplémentaire choisie parmi les additifs, les modifiants, les pigments et leurs mélanges, puis est séchée.

12. Procédé selon l'une quelconque des revendications 9 à 11, dans lequel la quantité de la substance supplémentaire est de 0,3 à 20 parties en poids pour 100 parties en poids de la somme de la résine thermoplastique et des fibres de renforcement.
